# EUROPEAN PATENT APPLICATION

(11) **EP 1 857 362 A1**
(43) Date of publication of application: **21.11.2007**
(21) Application number: 06076145.9
(22) Date of filing: 01.06.2006
(51) Int. Cl.: B64D 47/04

(54) **Aircraft vehicle**

(30) Priority: 18.05.2006 EP 06076074
(71) Applicant: Nederlandse Organisatie voor toegepast-natuurwetenschappelijk Onderzoek TNO, 2628 VK Delft (NL)
(72) Inventor: Kooi, Frank Leonard, 3994 XE Houten (NL)
(74) Representative: van Loon, C.J.J.

(57) **Abstract**

Aircraft vehicle (1), comprising one or more light emitting devices (2,3) arranged to emit a converging light beam (4) which intersect (5) at a predetermined level (6) below the aircraft vehicle. Each light emitting device may comprise e.g. two or three light beam sources, e.g. lasers. Two light emitting devices (2) may be mounted on either side of the aircraft vehicle (1), while a third light emitting device (3) may be mounted in front or behind the imaginary connection line between said two light emitting devices (2) on either side of the vehicle. The light emitting devices preferably are arranged to emit said converging light beam at the predetermined level below the aircraft vehicle within an area (7) in front of the vehicle which visible for the vehicle's crew.

## Description

### Field

The invention concerns an aircraft vehicle, e.g. a helicopter, and a configuration of light source for facilitating its landing which may be hampered by atmospheric obscurants like snow ("white-out") or dust ("brown-out").

### Background

During the day the sight of aircraft vehicle (e.g. helicopter) pilots may be hampered by atmospheric obscurants like snow (white-out) or dust (brown-out); at night, using NVG's - "Night Vision Goggles", eye-wear allowing to see in the dark - this typically is impossible. This is in first instance caused by the limited NVG field-of-view and the poor contrast of image intensification tubes. The limited resolution, the speckle noise, and the absence of color contribute to the poor visibility with NVG's. The increasing importance of military NVG operations in desert areas makes brown-out support increasingly important.

### Summary

The invention is based on the understanding that in principle it is possible to heads-out judge the distance to the ground surface and the vehicle roll through brown-outs and white-outs with a limited number of (e.g. IR) lasers mounted at (e.g. underneath) the vehicle.

The preferred geometry is as follows. The beams of two or more (preferably three) lasers are mounted to intersect at a specified distance, here we take 5 meters as example. The positioning of the lasers is not critical; they may be mounted in each others vicinity (e.g. 30 cm separation) out to very far apart: e.g. underneath the left and right helicopter "wing". The point of intersection should be in the pilots view, below and preferrably in front of the helicopter. As long as the helicopter is farther than e.g. 5 meters from the ground surface, the intersection is visible beyond which the beams diverge until they reach the surface. At the surface each beam ends in a bright spot. When the distance is less than 5 meters, the beams have an abrupt ending without intersecting each other. When the atmospheric obscurant is too dense, the beams disappear gradually without ending in a bright spot. The distance to the surface is unknown but a minimum distance may still be judged.

The beams sources (e.g. lasers) may originate from nearby locations (e.g. 30 cm apart) or may originate from opposite ends of the aircraft vehicle. For example, the left wing/side may contain two lasers, viz. one shining straight down and the other shining to the point 5 meters below the right wing. And symmetrically the right wing/side may contain two lasers, one shining straight down and the other shining to the point 5 meters below the left wing. The larger the mutual separation distance between the lasers within one co-operating set, the larger the height and therefore roll accuracy.

By mounting - in a preferred embodiment - two sets of lasers side-by-side, the helicopter's "roll" becomes visible as the asymmetry between the two sets. Drift is the result of a helicopter roll; the two-set configuration therefore also provides (indirect) information about drift.

Similarly the pitch may be made visible by adding - in a further preferred embodiment - a third set of lasers pointing farther in front of the helicopter.

Expected benefits are that the system supports the pilot to land while sight of the surface is obscured.

Secondly the NVG pilot will gain time to react to the onset of visual obscurants. Just a little bit of extra time will help to either 1) land safely or 2) abort the landing safely.

Thirdly it is reasonable to expect that the extra visual information will provide extra security making it possible to land more quickly, causing in turn less dust to be kicked up in front of the helicopter.

Fourthly the laser beams may make the onset of heavy obscurants less surprising.

The physical principle will be outlined next.

Night light coming from above (moon, stars, scatter) illuminates the ground surface as well as the atmospheric obscurant. The latter adds a veil of light, decreasing the contrast of the NVG image. This effect is comparable with the use of net curtains: the dark parts of a scene become invisible first and the bright parts stand out best. This is the reason why one can look through a net curtain from inside to outside, but not from outside in. In the same way, the laser beams are by far the brightest parts of the NVG scene and therefore remain visible in the atmospheric obscurant. The principle still applies during the day, but would require powerful lasers which are not eye-safe.

A preferred embodiment of the system according to the present invention will be outlined below.

It is noted that US 5315296 (NASA) discloses a light configuration for aircraft navigation. However, the purpose of the known system is facilitate low level flying over hilly terrains etc. by means of the use of a pattern of dots at places where the light beam hits the surface. At a specified height the dots form two lines, while above and below this height they form two triangles. The main difference with the concept according to the invention therefore is the visibility of the entire beams when an atmospheric obscurant is present. Interpreting the prior art dot configuration is very much a cognitive process that needs to be learned. The intersecting beams give a much more intuitive spatial orientation than the isolated dots and explicitly show distance. Secondly the concept according to the invention provides information regarding the air vehicle roll and/or pitch with respect to the surface. Other differences are
1. the purpose (travel versus landing),
2. the exact configuration of the lights, and
3. the specific purpose for use in brown-out / white-out.

### Exemplary Embodiment

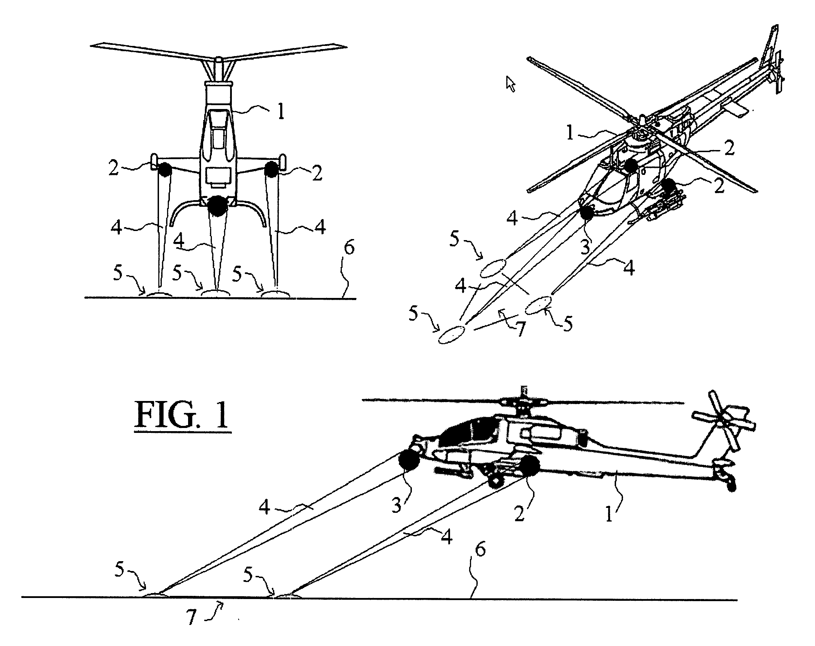

Figure 1 shows schematically a preferred embodiment of an aircraft vehicle according to the invention.

Figure 1 shows an aircraft vehicle, a helicopter 1, comprising a number of light emitting devices 2 and 3 respectively, which are arranged to emit a converging light beam 4 - or a set of converging light beams - which have their intersection 5 at a predetermined level 6 below the aircraft vehicle 1.

Each of said light emitting devices may comprise at least two light beam sources. It is preferred, however, for sake of reliability when each of said light emitting devices comprising (at least) three light beam sources. Each light beam source may be formed by a laser. The characteristics of those lasers will further be discussed below.

As visible in figure 1, two of said converging light emitting devices 2, are mounted on either side of the aircraft vehicle. By mounting - in this preferred embodiment - two light emitting devices 2 side-by-side, the helicopter's "roll" becomes visible as the asymmetry between the light beams coming from the two sets. Drift is the result of a helicopter roll; the two-set configuration therefore also provides (indirect) information about drift during landing.

Similarly the helicopter's pitch may be made visible by adding - in a further preferred embodiment - a third light emitting device 3, mounted in front (or behind) the imaginary connection line between said two light emitting devices 2 on either side of the vehicle.

It is preferred, as figure 1 shows, that the light emitting devices 2 and 3 are arranged so that the converging light beams or sets of converging light beams have their intersection at the predetermined level below the aircraft vehicle within an area 7 in front of the vehicle, within the field of vision of the vehicle's crew, especially its pilot.

It is noted that figure 1 shows the situation that the beam intersection falls exactly at the ground surface. When the aircraft vehicle is flying higher, the beam intersections will be above the surface and the beams will be seen diverging below the intersection. When the aircraft vehicle is flying lower, the beam intersections will not be visible, each beam ends as a bright dot where it hits the surface. When the aircraft vehicle is flying level the converging beams will be symmetrical. When the aircraft vehicle is not flying level the converging beams will be asymmetrical.

On the side of the air vehicle that is rolled up and/or pitched up, the beam convergence point is farther above the ground at high altitudes and the closer to the ground at low altitudes. The pilot's ability to judge the height, roll, and pitch of the aircraft vehicle will be more accurate as the point of intersection is closer to the surface, but will still be sufficiently accurate to be of help well above and below this point.

Referring to the characteristics of the lasers etc.:
1) a limited number of e.g. battery powered red or near-IR lasers;
2) mounted either directly to the helicopter or to a structure ("emergency triangle") which in turn is mounted to the helicopter, and
3) an on/off switch within reach of a crew-member.

The required power is low to medium because the NVG amplifies the light approximately 10000 times. The low power lasers are eye-safe. Basically, per light emitting device two lasers are sufficient to create the intersection. However, the preferred addition of a third laser per light emitting device makes any alignment error immediately visible to the helicopter crew because it will cause two intersections. This virtually eliminates maintenance check-ups.

Resuming, when the crew of a heli, wearing NVG's cannot see through e.g. dust, snow etc. laser sources, as outlined above, can still penetrate it. The lasers may have their intersection point at say 5 meters below and in front of the helicopter. When during the landing dust kicks in, the laser lines will appear. As long as the distance to the ground is larger than the 5 meters, the intersection is visible. When he distance is shorter the laser lines no longer intersect. When the dust becomes too thick the lines gradually disappear without ending in a bright spot. If the ground is perfectly level the three dots gradually converge and then diverge. If the ground is bumpy the three dots jump around and the time average (low-pass) position converges then diverges. If the system is misaligned the three lasers no longer intersect at one location. If two sets of lasers are placed side by side (left & right) an asymmetry means that the helicopter is not in level with respect to the ground. Three sets of lasers also provide the pitch. Simulations of converged lasers in a smoke filled room learn that the visual patterns caused by the configuration of light emitting devices (2,3) appear reasonably intuitive. This makes sense from a perception point of view: symmetry is a Gestalt etc.

## Claims

1. Aircraft vehicle (1), comprising one or more light emitting devices (2,3) each of them being arranged to emit a converging light beam (4) or a set of converging light beams which intersect (5) at a predetermined level (6) below the aircraft vehicle.

2. Aircraft vehicle according to claim 1, each of said light emitting devices comprising at least two light beam sources.

3. Aircraft vehicle according to claim 2, each of said light emitting devices comprising three light beam sources.

4. Aircraft vehicle according to any of claims 2 or 3, said light sources are lasers.

5. Aircraft vehicle according to claim 1, comprising two of said light emitting devices (2), mounted on either side of the aircraft vehicle (1).

6. Aircraft vehicle according to claim 5, comprising a third light emitting device (3), mounted in front or behind the imaginary connection line between said two light emitting devices (2) on either side of the vehicle.

7. Aircraft vehicle according to claim 1, said one or more light emitting devices being arranged to emit said converging light beam or said set of converging light beams which intersect at a predetermined level below the aircraft vehicle within an area (7) in front of the vehicle which visible for the vehicle's crew.
